# EUROPEAN PATENT SPECIFICATION

(11) **EP 4 243 142 B1**
(45) Date of publication and mention of the grant of the patent: **18.03.2026**
(21) Application number: 23160520.5
(22) Date of filing: 07.03.2023
(51) Int. Cl.: H01M 10/052, H01M 10/0566, H01M 10/058, H01M 10/42, C01B 39/00

(54) **SECONDARY CELL INCLUDING NA-Y-TYPE ZEOLITE ADSORBENT**
SEKUNDÄRZELLE MIT ZEOLITH-ADSORBENS VOM NA-Y-TYP
CELLULE SECONDAIRE COMPRENANT UN ADSORBANT DE ZÉOLITE DE TYPE NA-Y

(30) Priority: 07.03.2022 KR 20220028661
(43) Date of publication of application: 13.09.2023
(73) Proprietor: SK On Co., Ltd., Seoul 03161 (KR)
(72) Inventor: CHO, Eun Soo, 34124 Daejeon (KR); KIM, Sung Yeop, 34124 Daejeon (KR); NA, Ji Won, 34124 Daejeon (KR); PARK, Gyu Rim, 34124 Daejeon (KR)
(74) Representative: Bird & Bird LLP

(56) References cited:
- EP-A1- 0 942 485
- WO-A1-2015/136722
- WO-A1-2015/136722
- US-A1- 2013 224 571
- US-A1- 2013 224 571
- US-A1- 2014 178 724
- US-A1- 2014 178 724

## Description

### CROSS-REFERENCE TO RELATED APPLICATIONS

This application claims priority under 35 U.S.C. §119 to Korean Patent Application No. 10-2022-0028661, filed on March 7th, 2022, in the Korean Intellectual Property Office.

### TECHNICAL FIELD

The following disclosure relates to a secondary cell including a Na-Y-type zeolite adsorbent.

### BACKGROUND

Recently, as technology development and demand for mobile devices increase, demand for batteries as an energy source is rapidly increasing, and thus, many studies are being conducted on a cell which may meet various needs.

Representatively, in terms of the shape of the cell, demand for a prismatic secondary cell and a pouch secondary cell which are thin and may be applied to a product such as a mobile phone is high, and in term of the materials, demand for a lithium secondary cell such as a lithium ion cell and a lithium ion polymer cell having advantages such as high energy density, discharge voltage, and output stability is high.

However, a lithium secondary cell has a risk of ignition/explosion when exposed to a high temperature. Specifically, when a cell temperature rises, a reaction between an electrolyte solution and an electrode is promoted, resulting in production of heat of reaction to further raise the temperature, which accelerates the reaction between an electrolyte solution and an electrode again. Therefore, by the vicious circle of a rapid rise in a cell temperature and promotion of a reaction between an electrolyte solution and an electrode therefrom, a thermal runaway phenomenon in which a cell temperature rises rapidly occurs, and when the temperature rises above a certain level, cell ignition may occur.

In addition, when a lithium secondary cell is used and stored at a high temperature or for a long time, an electrolyte solution may be decomposed or an electrolyte solution and an electrode react, resulting in production of gas such as carbon dioxide or hydrogen fluoride, which increases a cell internal pressure to cause a swelling phenomenon, and thus, a lithium secondary cell explodes at a certain pressure or above. The risk of ignition/explosion as such may be the most fatal weakness of the lithium secondary cell.

Therefore, the essential consideration for the development of a lithium secondary cell is to secure safety.

Thus, as one of the methods of using a material inside a cell, there is a method of adding an additive for improving safety to an electrolyte solution or an electrode. A chemical safety device as such does not need additional process and space and may be applied to all types of cells, but the performance of a cell may be deteriorated by the addition of a material.

US 2013/0224571 A1 discloses lithium ion secondary battery and method for manufacturing the same. WO 2015/136722 A1 discloses lithium ion battery and electronic device using same. US 2014/0178724 A1 discloses non-aqueous electrolyte battery and battery pack. EP 0 942 485 A1 discloses lithium secondary battery.

Accordingly, there is a high need for development of new safety measures for preventing ignition/explosion without deteriorating the overall performance of a cell.

### SUMMARY

An embodiment of the present invention is directed to providing a secondary cell which has improved life by adsorbing gas produced when using a secondary cell.

In one general aspect, a secondary cell includes: an electrode assembly in which a positive electrode plate and a negative electrode plate are disposed with a separator interposed therebetween; and a cell case storing the electrode assembly and an electrolyte solution; wherein a Na-Y-type zeolite adsorbent is disposed between the cell case and the electrode assembly, wherein the Na-Y-type zeolite further includes Li.

In the secondary cell of the present invention, the Na-Y-type zeolite further includes Li, and the Na-Y-type zeolite may have a Si/Al ratio of 1.5 or more.

In the secondary cell according to an exemplary embodiment of the present invention, a pore diameter inside the Na-Y-type zeolite adsorbent may be 1 to 10 Å, and the Na-Y-type zeolite adsorbent may have a specific surface area by BET measurement of 100 to 1000 m²/g.

In the secondary cell according to an exemplary embodiment of the present invention, the adsorbent may be a composite of Na-Y-type zeolite and a resin, the resin may be selected from the group consisting of polyolefin and polyester, and the Y-type zeolite of the composite may form a percolation network.

In the secondary cell according to an exemplary embodiment of the present invention, the composite may be a porous composite.

In the secondary cell according to an exemplary embodiment of the present invention, the adsorbent may be prepared in a form selected from the group consisting of powder, pellet, and ball forms, and the adsorbent may be added in a form selected from the group consisting of a film, a sheet, and a non-woven fabric.

In the secondary cell according to an exemplary embodiment of the present invention, the adsorbent may be disposed in an upper portion or a terrace portion of the cell.

In the secondary cell according to an exemplary embodiment of the present invention, the Na-Y-type zeolite adsorbent may be prepared by a N₂ masking treatment.

Other features and aspects will be apparent from the following detailed description, the drawings, and the claims.

### BRIEF DESCRIPTION OF THE DRAWINGS

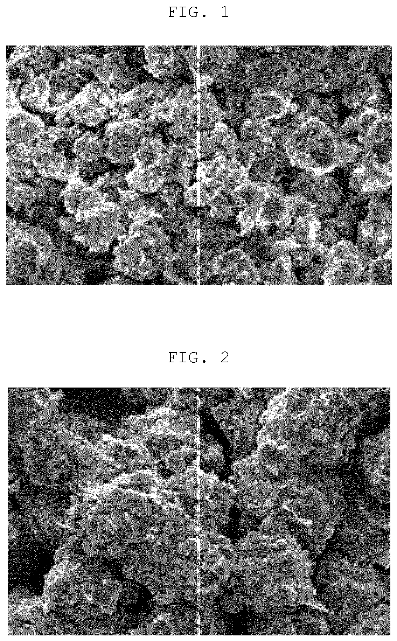

FIG. 1 is an SEM photograph of a P1 adsorbent according to Example 1
FIG. 2 is an SEM photograph of a PNSA adsorbent according to Example
FIG. 3 is a graph showing a carbon dioxide reduction rate depending on the type of single adsorbent item sample.
FIG. 4 is a graph showing a carbon dioxide reduction rate depending on the amount of a single adsorbent item sample.
FIG. 5 is a graph showing a carbon dioxide reduction rate when being in contact with an electrolyte solution depending on the type of single adsorbent item sample.

### DETAILED DESCRIPTION OF EMBODIMENTS

Hereinafter, a secondary cell manufactured by adding the adsorbent of the present invention will be described in detail with reference to the accompanying drawings.

The drawings to be provided below are provided by way of example so that the spirit of the present invention may be sufficiently transferred to a person skilled in the art to which the present invention pertains. Therefore, the present invention is not limited to the drawings provided below but may be embodied in many different forms, and the drawings suggested below may be exaggerated in order to clear the spirit of the present invention.

Technical terms and scientific terms used herein have the general meaning understood by those skilled in the art to which the present invention pertains, unless otherwise defined, and the description for the known function and configuration which may unnecessarily obscure the gist of the present invention will be omitted in the following description and the accompanying drawings.

In addition, the singular form used in the specification and claims appended thereto may be intended to include a plural form also, unless otherwise indicated in the context.

In the present specification and the appended claims, the terms such as "first" and "second" are not used in a limited meaning but are used for the purpose of distinguishing one constituent element from other constituent elements.

In the present specification and the appended claims, the terms such "comprise" or "have" mean that there is a characteristic or a constituent element described in the specification, and as long as it is not particularly limited, a possibility of adding one or more other characteristics or constituent elements is not excluded in advance.

In the present specification and the appended claims, when a portion such as a membrane (layer), a region, and a constituent element is present on another portion, not only a case in which the portion is in contact with and directly on another portion but also a case in which other membranes (layers), other regions, other constitutional elements are interposed between the portions is included.

The present invention provides a secondary cell including: an electrode assembly in which a positive electrode plate and a negative electrode plate are disposed with a separator interposed therebetween; and a cell case storing the electrode assembly and an electrolyte solution; wherein a Na-Y-type zeolite adsorbent is disposed between the cell case and the electrode assembly, wherein the Na-Y-type zeolite further includes Li.

In a specific example, in the secondary cell, the NaY-type zeolite adsorbent may be disposed between the cell case and the electrode assembly, and specifically, in the secondary cell including an electrode assembly, a main chamber for receiving the electrode assembly and an electrolyte solution, and a cell case storing the main chamber and an electrolyte solution for supplement, the Y-type zeolite adsorbent may be disposed on an upper portion of the main chamber or a terrace portion of the main chamber.

Here, the cell case includes the electrode assembly and the electrolyte solution and may be configured to be sealed along its circumference, and a sealing part on both sides where the positive electrode plate and the negative electrode plate are not disposed may be referred to as a terrace.

In a specific example, the Na-Y-type zeolite adsorbent may be positioned on an upper portion of the main chamber. When the Na-y-type zeolite adsorbent is positioned on the upper portion of the main chamber, the shape of the Na-Y-type zeolite adsorbent may be deformed into shapes such as triangles, quadrangles, trapezoids, and circles, but specifically, may be a rectangular shape. In addition, a width of the Na-Y-type zeolite adsorbent may be as long as the thickness of the main chamber, and a length of the NaY-type zeolite adsorbent may be as long as the length of the main chamber.

In a specific example, the Na-Y-type zeolite adsorbent may be positioned in the terrace portion of the main chamber. When the Na-Y-type zeolite adsorbent is positioned in the terrace portion of the main chamber, the shape of the Na-Y-type zeolite adsorbent may change with a remaining space of the terrace portion, and the shape may change into shapes such as triangles, quadrangles, trapezoids, and circles, but is not limited thereto.

In a specific example, the Na-Y-type zeolite adsorbent may serve to remove gas produced when the secondary cell is activated by charging and discharging or the secondary cell deteriorates.

More specifically, the secondary cell includes an electrolytic salt (lithium salt) and an organic solvent, and the electrolytic salt and the organic solvent may produce a hydrogen fluoride or carbon dioxide gas by the following reaction:

Electrolytic salt (lithium salt) : LiPF₆ + H₂O → POF₃ + 2HF

Organic solvent: (CH₂OCO₂Li)₂ + H₂O → Li₂CO₃ + (CH₂OH)₂ + CO₂

Zeolites are a crystal material in which silicon or aluminum is bonded to an oxygen atom to form a tetrahedral structure, which is regularly arranged to form a three-dimensional structure. Zeolites have pores having certain size and shape, and thus, zeolites have a specific surface area corresponding to hundreds of square meters per unit gram. Zeolites have various pore sizes and shapes depending on the type, and the amount or intensity of their acid site may be widely adjusted.

More specifically, a zeolite is a Na-Y-type zeolite, and is a large pore zeolite in which a pore opening is composed of 12 oxygen atoms and may have an FAU structure. Specifically, the Na-Y-type zeolite may refer to a zeolite having a Si/Al ratio of 1.5 or more, specifically 1.5 to 3.

Since the Na-Y-type zeolite is a large pore zeolite, relatively large molecules may diffuse into pores, a reactant may easily approach the acid site or metal position of zeolite, and the product may rapidly move out of pores to cause fewer side reactions. Accordingly, the Na-Y-type zeolite has an excellent ability to adsorb gas such as hydrogen fluoride and carbon dioxide produced by a reaction of an electrolytic salt and an electrolyte solution in a secondary cell.

In a specific example, the Na-Y-type zeolite has a structure composed of Al, Si, and O as described above, and further includes Li. That is, the Y-type zeolite may be a zeolite substituted (ion exchanged) by an ion selected from the group consisting of Na and Li. By further including the material, zeolite may have high thermal stability, and may adsorb moisture primarily and adsorb hydrogen fluoride and carbon dioxide gases produced later more effectively. Here, the Y-type zeolite may contain 1 to 30 wt%, specifically 5 to 25 wt% of the substituted (ion exchanged) ion.

More specifically, the Na-Y-type zeolite may include 10 to 30 wt%, specifically 12 to 28 wt%, and more specifically 15 to 25 wt% of Si. In addition, it may include 10 to 30 wt%, specifically 12 to 28 wt%, and more specifically 15 to 25 wt% of Al. In addition, it may include 30 to 60 wt%, specifically 35 to 55 wt%, and more specifically 40 to 50 wt% of O.

Still more specifically, the Y-type zeolite is a mixture of a Na-Y-type zeolite substituted by a Na ion, and a Li-Y-type zeolite substituted by a Li ion. The Na-Y-type zeolite may contain 1 to 30 wt% of Na, substantially 5 to 20 wt% of Na, and the Li-Y-type zeolite may contain 0.1 to 25 wt% of Li, substantially 0.5 to 20 wt% of Li. When the Y-type zeolite adsorbent contains the Na-Y-type zeolite, a large amount of gas may be removed by adsorption initially during the use of a cell, and when the Y-type zeolite adsorbent contains the Li-Y-type zeolite, an excellent gas adsorption force may be maintained even in the case of a long use time of the cell and a stable gas adsorption force may be maintained even in contact with an electrolyte solution.

In a specific example, the Na-Y-type zeolite adsorbent may include pores inside, and a pore diameter may be 1 to 10 Å, specifically 2 to 9 Å, and more specifically 3 to 8 Å. The Y-type zeolite adsorbent may show an excellent adsorption force for hydrogen fluoride and carbon dioxide gases by the pores having the diameter in the above range.

In a specific example, the Na-Y-type zeolite adsorbent may have a specific surface area by BET measurement of 100 to 1,000 m²/g, specifically 200 to 900 m²/g, and more specifically 300 to 800 m²/g, but is not necessarily limited thereto.

In a specific example, the Na-Y-type zeolite adsorbent may have a size of 0.1 to 10 µm, specifically 0.3 to 5 µm, and more specifically 0.5 to 3 µm, but is not necessarily limited thereto.

In a specific example, the Na-Y-type zeolite adsorbent may have a carbon dioxide adsorption amount of 50 to 3,000 ml/g, specifically 70 to 2,000 ml/g, and more specifically 100 to 1,000 ml/g as measured at 25°C under 1 atm, but is not necessarily limited thereto.

In a specific example, the adsorbent may be a composite of a Na-Y-type zeolite and a resin, and the resin may be a material or in the form which does not react with an electrolyte solution, an electrode, and the like without hindering performance such as cell resistance. More specifically, the resin may be selected from the group consisting of polyolefin and polyester, and a non-limiting example of the resin may include PP, PE, PET, and the like.

In the composite of a Na-Y-type zeolite and a resin, the Na-Y-type zeolite may form a percolation network. That is, the Na-Y-type zeolite may be mixed in an amount of a critical content or more to form a percolation network. Thus, gas is easily introduced, which is more advantageous for gas adsorption. The Na-Y-type zeolite may have a plate or acicular particle shape so that it may effectively form a percolation network, and may have an aspect ratio of 1.5 or more, specifically 2 or more, and more specifically 5 or more, and 100 or less without limitation.

The aspect ratio may be defined as, in the case of a plate shape, a ratio of a thickness to a length of a long axis in a plane direction of particles, and in the case of an acicular shape, a ratio of a diameter of a section to a length of acicular particles.

In addition, the composition of a Na-Y-type zeolite and a resin may be a porous composite. The pores of the porous composite may have a pore size at which gas produced in a secondary cell does not have diffusion resistance, and specifically, may be 2 nm or more, 5 nm or more, 10 nm or more, 20 nm or more, or 50 nm or more and 100 µm or less, 10 µm or less, or 1 µm or less, but is not limited thereto. The pores may be specifically open pores. The composite of a Na-Y-type zeolite and a resin has porous characteristics, thereby showing an excellent adsorption force for hydrogen fluoride and carbon dioxide gases.

In a specific example, the adsorbent may be prepared in a form selected from the group consisting of powder, pellet, or ball form. Here, the adsorbent may have a size of 0.1 to 10 µm, specifically 0.3 to 5 µm, and more specifically 0.5 to 3 µm, but is not limited thereto as long as it is a size which is easy to prepare in a form to be input.

In a specific example, the adsorbent may be added in a form selected from the group consisting of film, sheet, or nonwoven form. Here, the form of the adsorbent to be added should be set so that energy density is not impaired, but is not limited as long as the form is independent of a cell size.

In a specific example, the secondary cell may contain 1 to 20 parts by weight, specifically 2 to 15 parts by weight, and more specifically 5 to 15 parts by weight of the Na-Y-type zeolite, based on 100 parts by weight of the electrolyte solution.

In a specific example, the electrode assembly included in the cell case includes a positive electrode plate, a negative electrode plate, and a separator. That is, in the electrode assembly, the positive electrode plate and the negative electrode plate are sequentially stacked with a separator interposed therebetween and are insulated from each other. The electrode assembly may be formed in various structures such as a wound shape, a stack shape, or stack/folding shape, depending on the embodiment.

The positive electrode plate is formed by including a positive electrode current collector composed of a sheet metal, for example, an aluminum foil having excellent conductivity and a positive electrode active material layer coated on both surfaces of the positive electrode current collector. The positive electrode plate may have a positive electrode current collector area where the positive electrode active material layer is not formed, that is, a positive electrode-uncoated part formed on both surfaces. Further, in the positive electrode plate, a positive electrode tab formed of a metal material may be bonded to one side end of a positive electrode-uncoated part.

The negative electrode plate includes a negative electrode current collector composed of a conductive sheet metal, for example, a copper foil and a negative electrode active material layer coated on both surfaces of the negative electrode current collector. The negative electrode plate has a negative electrode current collector area where the negative electrode active material layer is not formed, that is, a negative electrode-uncoated part formed on both side portions. Further, in the negative electrode plate, a negative electrode tab formed of a metal material, for example, a nickel material may be bonded to one side end. Two or more negative electrode plates may be included according to the shape of the electrode assembly like the positive electrode plate, and in particular, in the case of a stack type electrode assembly, a plurality of negative electrode plates may be included.

The separator is disposed between a positive electrode plate and a negative electrode plate and electrically insulates the positive electrode plate and the negative electrode plate from each other, and may be formed in the form of a porous film so that lithium ions and the like pass through each other between the positive electrode plate and the negative electrode plate. The separator may be formed of a porous film using, for example, polyethylene (PE), polypropylene (PP), or a composite film thereof.

In a specific example, the cell case has an empty space inside, and may be formed so that the electrode assembly may be stored in the interior space. The cell case may be formed in a hexahedral or prismatic shape, but the shape of the cell case is not limited to a certain shape in the present invention.

In a specific example, the cell case may include an electrolyte solution, and the electrolyte solution may include a liquid solvent and a lithium salt. As described above, the liquid solvent and the lithium salt included in the electrolyte solution may react with moisture absorbed into the cell to cause a problem of producing gas such as hydrogen fluoride or carbon dioxide. As the liquid solvent, an aprotic organic solvent may be used, and a non-limiting example of the liquid solvent may include ethylene carbonate, propylene carbonate, butylene carbonate, dimethyl carbonate, diethyl carbonate, and the like, but is not limited thereto. In addition, a non-limiting example of the lithium salt may include LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, and the like, but is not limited thereto as long as it is a good material for being dissolved in an electrolyte.

Hereinafter, the present invention will be described in detail

### <Example 1> Manufacture of secondary cell including P1 particle adsorbent ,not according to claim 1.

As an electrolyte solution, a solution in which LiPF₆ was dissolved in a mixed solvent of ethylene carbonate (EC) and ethylmethyl carbonate (EMC) at a volume ratio of 3:7 to be a 1.0 M solution, which was a basic electrolyte solution (1M LiPF₆, EC/EMC = 3:7), was prepared.

A LiNiCoMnO₂ and LiMn₂O₄ mixture at a weight ratio of 1:1 as a positive electrode active material, polyvinylidene fluoride (PVdF) as a binder, and carbon as a conductive material were mixed at a weight ratio of 92:4:4, and then the mixture was dispersed in N-methyl-2-pyrrolidone to prepare a positive electrode slurry. The slurry was coated on an aluminum foil having a thickness of 20 µm, which was dried and rolled to manufacture a positive electrode. Artificial graphite as a negative electrode active material, a styrene-butadiene rubber as a binder, and carboxymethyl cellulose as a thickener were mixed at a weight ratio of 96:2:2, and then the mixture was dispersed in water to prepare a negative electrode active material slurry. The slurry was coated on a copper foil having a thickness of 15 µm, which was dried and rolled to manufacture a negative electrode.

A polyethylene (PE) film separator having a thickness of 25 µm was stacked between the electrodes manufactured above to form a cell using a pouch having a size of a thickness of 8 mm × a width of 270 mm × a length of 185 mm.

To the cell manufactured by the above method, an adsorbent including P1 particles of the following conditions so as to be 2.5 g or 5 g based on 50 g of the electrolyte solution was attached to the upper portion or a terrace portion of the cell.

P1 particles: Na-Y-type zeolite, powder phase having a size of 0.85 to 1.18 mm, BET specific surface area: 620 m²/g, Si/Al ratio: 1.59, containing 9.95 wt% of Na.

The adsorbent-attached cell was stored inside a cell case, and among the sealing parts formed in the cell case, the sealing parts other than one sealing part on which a heat bonding film is adhered were heat-bonded, and the electrolyte solution was injected through an electrolyte solution inlet formed in the sealing part in an open state. Thereafter, the electrolyte solution inlet was also sealed by heat bonding.

### <Example 2> Manufacture of secondary cell including PNSA particle adsorbent (not according to claim 1).

A secondary cell was manufactured in the same manner as in Example 1, except that an adsorbent including PNSA particles (Li-Y-type zeolite) obtained by substituting Na of the P1 particles with Li and then performing compression molding into a pellet shape was used instead of the adsorbent including P1 particles.

### <Comparative Example 1> Manufacture of secondary cell including no adsorbent

A secondary cell was manufactured in the same manner as in Example 1, except that the adsorbent including P1 particles was not used.

### <Comparative Example 2> Manufacture of secondary cell including PG3 particle adsorbent

A secondary cell was manufactured in the same manner as in Example 1, except that an adsorbent including PG3 particles which were a powder X-type zeolite having a BET specific surface of 735 m²/g was used instead of the adsorbent including P1 particles.

### <Experimental Example 1> Single item test for verification of adsorbent material

In order to confirm the carbon dioxide adsorption performance of the Y-type zeolite adsorbent, the electrolyte solution and moisture were added in certain amounts to a pouch having a similar to the actual cell, which was allowed to stand at a high temperature to produce gas such as carbon dioxide.

More specifically, 50 g of the electrolyte solution and 10,000 ppm of moisture were added into a sealing dummy cell having three side lengths of 260 mm, 95 mm, and 15 mm, respectively, which was allowed to stand for 3 days in an oven at 80°C to produce gas such as carbon dioxide.

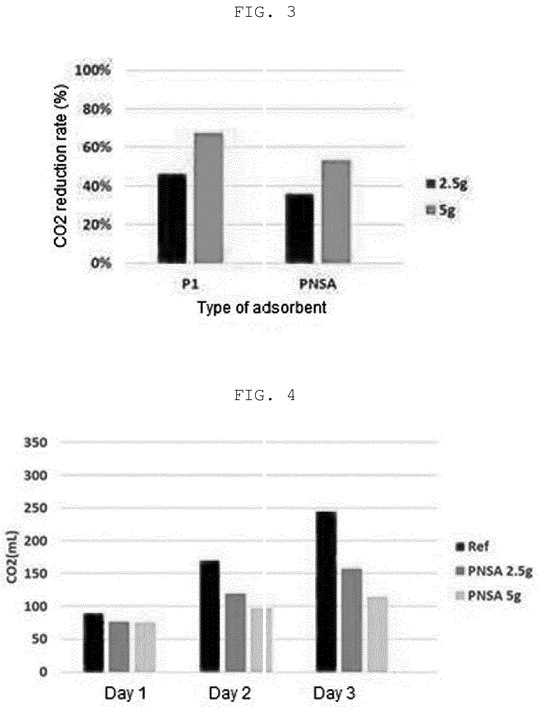

As a result, as confirmed in FIG. 3, when 2.5 g of Example 1 (Na-Y-type zeolite) or Example 2 (Li-Y-type zeolite) was used, a carbon dioxide reduction rate of about 40% was shown. In particular, it was found that when the Na-Y-type zeolite was used, a carbon dioxide reduction rate of about 45% was shown. In addition, when 5 g of the Na-Y-type and the Li-Y-type zeolites were used, a carbon dioxide reduction rate of about 60% was shown, and in particular, it was found that when the Na-Y-type zeolite was used, a carbon dioxide reduction rate of about 65% was shown.

In addition, a carbon dioxide reduction rate over time was measured. As a result, as confirmed in FIG. 4, as time passed, when there was no adsorbent, the amount of carbon dioxide was increased from about 90 ml to 170 ml, and to about 250 ml after 3 days, but it was found that when 2.5 g of the Li-Y-type zeolite was used, the increased amount of carbon dioxide was significantly decreased, and when 5 g of the Li-Y-type zeolite was used, the increased amount of carbon dioxide was further decreased.

Thus, when the Y-type zeolite adsorbent was used as an adsorbent, the increased amount of carbon dioxide was decreased, and thus, it was confirmed that the Y-type zeolite adsorbent had an excellent effect on carbon dioxide adsorption.

In addition, when the Y-type zeolite adsorbent was added to the real cell, it was in contact with an electrolyte solution, and thus, a single Y-type zeolite adsorbent item sample was manufactured to confirm whether the adsorption force was affected.

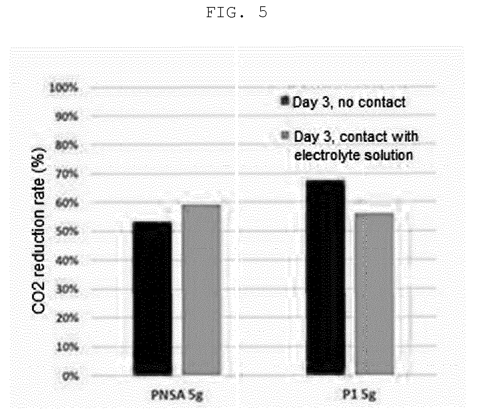

As a result, as confirmed in FIG. 5, considering that when the Y-type zeolite was in contact with an electrolyte solution also, there was no large difference in the carbon dioxide reduction rate as compared with the case in which the Y-type zeolite was not in contact with an electrolyte solution, it was confirmed that the adsorption force was not affected much. That is, it was confirmed that even when the Na-Y-type zeolite of the present invention was used in the real cell as an adsorbent, the carbon dioxide adsorption performance was not deteriorated by the contact with an electrolyte solution.

### <Experimental Example 2> Test for confirming whether side reaction occurs and test for cell characteristics

When the Y-type zeolite was used in the real cell as an adsorbent, it was analyzed whether gas such as SiF₄ occurred by a side reaction. As the Y-type zeolite adsorbent, PNSA particles which were the same as those of Example 2 were used, and after the cell was allowed to stand at a high temperature of 70°C for 20 days, component analysis was performed by gas chromatography to evaluate whether a side reaction occurred.

As a result, it was confirmed that materials such as ethyl formate, DMC, DEC, and EMC were detected, like the case of using no adsorbent, regardless of the amount of the adsorbent. That is, it was confirmed that even when the Y-type zeolite was used in the real cell as an adsorbent, expected gas was not produced by the side reaction as compared with the case of using no adsorbent.

It was analyzed whether the charge/discharge characteristics or the high temperature characteristics of the cell would be deteriorated by the adsorbent, when the Y-type zeolite was used as an adsorbent in a real cell. Each of the cells manufactured in Examples 1 and 2 and the reference cell having no adsorbent was charged and discharged 500 times under the condition of 1 C at a temperature of 45°C. As a result, it was confirmed that the cell having the adsorbent showed substantially the same capacity retention rate as the reference cell. In addition, each of the cells manufactured in Examples 1 and 2 and the reference cell having no adsorbent was stored for a long time of 12 weeks at a temperature of 60°C under the condition of SOC 100, and then a discharge capacity was measured. As a result, it was confirmed that the cell having the adsorbent had substantially the same discharge capacity as the reference cell. The secondary cell including the Na-Y-type zeolite adsorbent of the present invention may remove gas such as carbon dioxide and hydrogen fluoride produced inside by adsorption to prevent a sealing part from being pushed, and improve stability such as maintaining secondary cell performance, increasing a cell life, and preventing ignition.

The secondary cell including a Na-Y-type zeolite adsorbent of the present invention may remove gas such as carbon dioxide and hydrogen fluoride produced inside by adsorption to prevent a sealing part from being pushed, and improve stability such as maintaining secondary cell performance, increasing a cell life, and preventing ignition.

## Claims

1. A secondary cell comprising:
an electrode assembly in which a positive electrode plate and a negative electrode plate are disposed with a separator interposed therebetween; and
a cell case storing the electrode assembly and an electrolyte solution,
wherein a Na-Y-type zeolite adsorbent is disposed between the cell case and the electrode assembly, and
wherein the Na-Y-type zeolite further includes Li.

2. The secondary cell of claim 1, wherein the Na-Y-type zeolite has a Si/Al ratio of 1.5 or more.

3. The secondary cell of any one of claims 1 or 2, wherein the Na-Y-type zeolite adsorbent has a specific surface area by BET measurement of 100 to 1000 m²/g.

4. The secondary cell of any one of claims 1 to 3, wherein the adsorbent is a composite of the Na-Y-type zeolite and a resin.

5. The secondary cell of claim 4, wherein the resin is selected from the group consisting of polyolefin and polyester.

6. The secondary cell of any one of claims 4 and 5, wherein the composite is a porous composite.

7. The secondary cell of any one of claims 1 to 6, wherein the adsorbent is prepared in a form selected from the group consisting of powder, pellet, and ball forms.

8. The secondary cell of any one of claims 1 to 7, wherein the adsorbent is added in a form selected from the group consisting of a film, a sheet, and a non-woven fabric.

9. The secondary cell of any one of claims 1 to 8, wherein the adsorbent is disposed in an upper portion of a main chamber for receiving the electrode assembly and the electrolyte solution or a terrace portion, wherein the terrace portion is a sealing part on both sides of the cell case where the positive electrode plate and the negative electrode plate are not disposed.

10. The secondary cell of any one of claims 1 to 9, wherein the Na-Y-type zeolite adsorbent is prepared by a N₂ masking treatment.

## Patentansprüche

1. Sekundärzelle umfassend:
eine Elektrodenanordnung, bei der eine positive Elektrodenplatte und eine negative Elektrodenplatte mit einem dazwischen angeordneten Separator angeordnet sind; und
ein Zellengehäuse, das die Elektrodenanordnung und eine Elektrolytlösung enthält,
wobei ein Na-Y-Zeolith-Adsorptionsmittel zwischen dem Zellengehäuse und der Elektrodenanordnung angeordnet ist und
wobei der Na-Y-Zeolith ferner Li enthält.

2. Sekundärzelle nach Anspruch 1, wobei der Na-Y-Zeolith ein Si/Al-Verhältnis von 1,5 oder mehr aufweist.

3. Sekundärzelle nach einem der Ansprüche 1 oder 2, wobei das Na-Y-Zeolith-Adsorptionsmittel eine spezifische Oberfläche gemäß BET-Messung von 100 bis 1000 m²/g aufweist

4. Sekundärzelle nach einem der Ansprüche 1 bis 3, wobei das Adsorptionsmittel ein Verbundstoff aus dem Na-Y-Zeolith und einem Harz ist.

5. Sekundärzelle nach Anspruch 4, wobei das Harz ausgewählt ist aus der Gruppe bestehend aus Polyolefin und Polyester.

6. Sekundärzelle nach einem der Ansprüche 4 und 5, wobei der Verbundstoff ein poröser Verbundstoff ist.

7. Sekundärzelle nach einem der Ansprüche 1 bis 6, wobei das Adsorptionsmittel in einer Form ausgewählt aus der Gruppe bestehend aus Pulver-, Pellet- und Kugelformen hergestellt ist.

8. Sekundärzelle nach einem der Ansprüche 1 bis 7, wobei das Adsorptionsmittel in einer Form ausgewählt aus der Gruppe bestehend aus einer Folie, einer Bahn und einem Vliesstoff zugegeben ist.

9. Sekundärzelle nach einem der Ansprüche 1 bis 8, wobei das Adsorptionsmittel in einem oberen Abschnitt einer Hauptkammer zum Aufnehmen der Elektrodenanordnung und der Elektrolytlösung oder einem Terrassenabschnitt angeordnet ist, wobei der Terrassenabschnitt ein Abdichtungsteil an beiden Seiten des Zellengehäuses ist, wo die positive Elektrodenplatte und die negative Elektrodenplatte nicht angeordnet sind.

10. Sekundärzelle nach einem der Ansprüche 1 bis 9, wobei das Na-Y-Zeolith-Adsorptionsmittel durch eine N₂-Maskierungsbehandlung hergestellt ist.

## Revendications

1. Pile rechargeable comprenant :
un ensemble électrode dans lequel une plaque d'électrode positive et une plaque d'électrode négative sont disposées avec un séparateur intercalé entre elles ; et
un boîtier de pile stockant l'ensemble électrode et une solution d'électrolyte,
un adsorbant zéolithique de type Na-Y étant disposé entre le boîtier de la pile et l'ensemble électrode, et
la zéolite de type Na-Y comportant en outre du Li.

2. Pile rechargeable de la revendication 1, dans laquelle la zéolite de type Na-Y présente un rapport Si/Al de 1,5 ou plus.

3. Pile rechargeable de l'une quelconque des revendications 1 et 2, dans laquelle l'adsorbant zéolithique de type Na-Y présente une surface spécifique par mesure BET de 100 à 1000 m²/g.

4. Pile rechargeable de l'une quelconque des revendications 1 à 3, dans laquelle l'adsorbant est un composite de la zéolite de type Na-Y et d'une résine.

5. Pile rechargeable de la revendication 4, dans laquelle la résine est choisie dans le groupe constitué par la polyoléfine et le polyester.

6. Pile rechargeable de l'une quelconque des revendications 4 et 5, dans laquelle le composite est un composite poreux.

7. Pile rechargeable de l'une quelconque des revendications 1 à 6, dans laquelle l'adsorbant est préparé sous une forme choisie dans le groupe constitué par les formes de poudre, de pastille et de bille.

8. Pile rechargeable de l'une quelconque des revendications 1 à 7, dans laquelle l'adsorbant est ajouté sous une forme choisie dans le groupe constitué par un film, une feuille et un non-tissé.

9. Pile rechargeable de l'une quelconque des revendications 1 à 8, dans laquelle l'adsorbant est disposé dans une partie supérieure d'une chambre principale destinée à recevoir l'ensemble électrode et la solution d'électrolyte ou une partie en terrasse, la partie en terrasse étant une partie de scellement sur les deux côtés du boîtier de pile où la plaque d'électrode positive et la plaque d'électrode négative ne sont pas disposées.

10. Pile rechargeable de l'une quelconque des revendications 1 à 9, dans laquelle l'adsorbant zéolithique de type Na-Y est préparé par un traitement de masquage au N₂.
